# EUROPÄISCHE PATENTSCHRIFT

(11) **EP 4 400 337 B1**
(45) Veröffentlichungstag und Bekanntmachung des Hinweises auf die Patenterteilung: **30.07.2025**
(21) Anmeldenummer: 23215129.0
(22) Anmeldetag: 08.12.2023
(51) Int. Cl.: B60C 23/04

(54) **VERFAHREN ZUR ZUORDNUNG VON REIFENDRUCKÜBERWACHUNGSEINHEITEN ZU EINEM FAHRZEUG**
METHOD FOR ALLOCATING TYRE PRESSURE MONITORING UNITS TO A VEHICLE
PROCÉDÉ D'ATTRIBUTION D'UNITÉS DE SURVEILLANCE DE PRESSION DE PNEU À UN VÉHICULE

(30) Priorität: 21.12.2022 DE 102022134324
(43) Veröffentlichungstag der Anmeldung: 17.07.2024
(73) Patentinhaber: Huf Baolong Electronics Bretten GmbH, 75015 Bretten (DE)
(72) Erfinder: Kessler, Ralf, 76327 Pfinztal (DE); Vögeli, Patrick, 76356 Weingarten (DE); Wagner, Markus, 75038 Flehingen (DE)
(74) Vertreter: Twelmeier Mommer & Partner

(56) Entgegenhaltungen:
- JP-A- 2003 291 615
- US-A1- 2017 282 654
- US-A1- 2020 331 309

## Beschreibung

Die Erfindung betrifft ein Verfahren zur Zuordnung von Reifendrucküberwachungseinheiten zu einem Fahrzeug. Ein Verfahren mit den im Oberbegriff des Anspruchs 1 angegebenen Merkmalen ist aus US 2020/0331309 A1 bekannt.

Reifendrucküberwachungseinheiten werden in Fahrzeugreifen montiert und enthalten einen Drucksensor zur Messung des Reifendrucks sowie einen Sender, um gemessene Druckdaten in Datentelegrammen auszusenden. Die Datentelegramme enthalten dabei stets auch eine charakteristische Kennung der sendenden Reifendrucküberwachungseinheit. Eine zentrale Empfangseinheit eines Fahrzeugs soll in modernen Reifendrucküberwachungssystem selbsttätig ermitteln, welche Reifendrucküberwachungseinheit in welchem Fahrzeugreifen montiert ist. Die zentrale Empfangseinheit muss also jedem Fahrzeugreifen bzw. jeder Reifenposition (z.B. vorne rechts) eine charakteristische Kennung zuordnen. Geeignete Verfahren hierfür sind beispielsweise aus US 8 600 607 B2, US 10 442 255 B2 sowie US 9 902 216 B2 bekannt. Weitere Verfahren sind aus JP2003291615 A und US2017282654 A1 bekannt.

Wenn sich mehrere Fahrzeuge in geringem Abstand voneinander befinden, kann es vorkommen, dass die zentrale Empfangseinheit eines Fahrzeugs Datentelegramme von Reifendrucküberwachungseinheiten verschiedener Fahrzeuge empfängt. Wenn dann alle charakteristischen Kennungen von empfangenen Datentelegrammen bei einem Verfahren zur Zuordnung von Kennungen zu Radpositionen berücksichtigt werden, kann die Datenmenge sehr groß werden und der Aufwand exponentiell ansteigen. Aus diesem Grund sehen moderne Reifendrucküberwachungssysteme in der Regel vor, dass eine zentrale Empfangseinheit des Fahrzeugs zunächst ermittelt, welche charakteristischen Kennungen zu Reifendrucküberwachungseinheiten ihres Fahrzeugs gehören. Die zentrale Empfangseinheit eines Fahrzeugs führt dann also zunächst ein Verfahren durch, mit dem die Reifendrucküberwachungseinheiten ihres Fahrzeugs erkannt und dann ihm zugeordnet werden. Erst wenn bekannt ist, welche Reifendrucküberwachungseinheiten zu dem Fahrzeug gehören, wird ermittelt, zu welchen Fahrzeugrädern die betreffenden Reifendrucküberwachungseinheiten jeweils gehören.

Aufgabe der vorliegenden Erfindung ist es, einen Weg aufzuzeigen, wie Reifendrucküberwachungseinheiten schnell und zuverlässig einem Fahrzeug zugeordnet werden können.

Diese Aufgabe wird durch ein Verfahren mit den im Anspruch 1 angegebenen Merkmalen gelöst. Vorteilhafte Weiterbildungen der Erfindung sind Gegenstand von Unteransprüchen.

Bei einem erfindungsgemäßen Verfahren wird zunächst ermittelt, welche charakteristischen Kennungen von der zentralen Empfangseinheit empfangen werden. Wenn ein Fahrzeug n Räder hat, ist zu vermuten, dass die charakteristischen Kennungen der Reifendrucküberwachungseinheiten dieser n Räder von der zentralen Empfangseinheit am häufigsten empfangen werden (n ist eine natürliche Zahl, z.B. 4). Wenn sich viele Fahrzeuge innerhalb der Sendereichweite der Reifendrucküberwachungseinheiten befinden, kann es aber vorkommen, dass erst nach längerer Zeit und dem Empfang einer sehr großen Anzahl von Datentelegrammen ein deutlicher Abstand in der Empfangshäufigkeit von Reifendrucküberwachungseinheiten des Fahrzeugs und fremden Fahrzeugen festgestellt werden. Erfindungsgemäß wird deshalb von der zentralen Empfangseinheit bei der Zuordnung zusätzlich auch berücksichtigt, welche charakteristischen Kennungen von Reifendrucküberwachungseinheiten empfangen wurde. Bei einem erfindungsgemäßen Verfahren senden deshalb Reifendrucküberwachungseinheiten jeweils auch Datentelegramme, in denen charakteristische Kennungen andere Reifendrucküberwachungseinheiten aufgelistet sind. Sowohl die zentrale Empfangseinheit des Fahrzeugs als auch die Reifendrucküberwachungseinheiten erfassen jeweils in Zählern, wie oft eine charakteristische Kennung empfangen wurde. Anhand der eigenen Zählerstände und der von Reifendrucküberwachungseinheiten in Datentelegrammen gesendeten Informationen über den Empfang der charakteristischen Kennungen anderer Reifendrucküberwachungseinrichtungen ermittelt die zentrale Empfangseinheit des Fahrzeugs dann, welche charakteristischen Kennungen zu Reifendrucküberwachungseinheiten des Fahrzeugs gehören.

Eine vorteilhafte Weiterbildung der Erfindung sieht vor, dass die Reifendrucküberwachungseinheiten Datentelegramme über Bluetooth senden, d.h. nach dem Industriestandard Bluetooth mit der zentralen Empfangseinheit des Fahrzeugs kommunizieren. Bevorzugt wird dabei der Industriestandard Bluetooth Low Energy, im folgenden BLE, für eine drahtlose Kommunikation der Reifendrucküberwachungseinheiten und der zentralen Empfangseinheit des Fahrzeugs genutzt.

Mit BLE werden Daten im Frequenzbereich von 2,4 GHz übertragen. Dabei wird das ISM Frequenzband mit 40 Kanälen in einer Breite von jeweils 2 MHz unterteilt. Bei der Datenübertragung können einzelne Kanäle nach einem zwischen Sender und Empfänger ausgetauschten Schema gewechselt werden und zusätzlich verschlüsselt werden. Das Übertragen von Daten in ständig wechselnden Kanälen nach einem zwischen Sender und Empfänger ausgetauschten Schema bezeichnet man als einen abgesicherten Verbindungsmodus bzw. eine (abgesicherte) Verbindung. Manchmal wird auch der englische Begriff "connected mode" verwendet Damit eine Reifendrucküberwachungseinheit mit einer zentralen Empfangseinheit des Reifendrucküberwachungssystems eines Fahrzeugs eine abgesicherte Verbindung aufbauen kann, müssen sich zunächst die Reifendrucküberwachungseinheit und die zentrale Empfangseinheit auf ein Schema einigen, nach dem die Kanäle bei der Übertragung gewechselt werden. Dazu werden von der Sendeeinrichtung bei Fahrtbeginn Funksignale gemäß BLE in einem advertising mode gesendet, um mit einer Zentraleinheit des Fahrzeugs zunächst eine Verbindung aufzubauen. Der advertising mode wird manchmal auch als broadcasting mode bezeichnet. Sobald eine Verbindung aufgebaut ist, können dann Daten in einem abgesicherten Verbindungsmodus gesendet werden.

In einem Verbindungsmodus kann die zentrale Empfangseinheit des Fahrzeugs einer Reifendrucküberwachungseinheit Befehle erteilen, insbesondere zum Aussenden von Datentelegrammen. Diese Möglichkeit kann dazu genutzt werden, dass Reifendrucküberwachungseinheiten Datentelegramme, in denen charakteristische Kennungen andere Reifendrucküberwachungseinheiten und gegebenenfalls auch deren Empfangshäufigkeit angegeben sind, nur auf Anforderung aussenden. Auf diese Weise kann die Sendetätigkeit vorteilhaft reduziert werden.

An sich genügt es, wenn eine Reifendrucküberwachungseinheit der zentralen Empfangseinheit mitteilt, welche charakteristischen Kennungen anderer Reifendrucküberwachungseinheiten am häufigsten empfangen wurden. Bei einem Fahrzeug mit n Rädern, genügt es beispielsweise, wenn die Reifendrucküberwachungseinheiten jeweils mitteilen, welche n-1 Kennungen am Häufigsten empfangen wurden. Es ist aber auch möglich, dass die Reifendrucküberwachungseinheiten der zentralen Empfangseinheit umfangreichere Informationen zur Verfügung stellen, insbesondere Zählerstände zu den verschiedenen charakteristischen Kennungen und/oder eine größere Anzahl als nur die n-1 am häufigsten empfangene Kennungen. Die zentrale Empfangseinheit kann dann eine beispielsweise eine statistische Auswertung der verschiedenen Zählerstände vornehmen, um zu ermitteln, welche Reifendrucküberwachungseinheiten dem Fahrzeug zuzuordnen sind oder die von Reifendrucküberwachungseinheiten empfangen Zählerstände zu den eigenen Zählerständen der betreffenden Reifendrucküberwachungseinheiten addieren, um anhand der von ermittelten Gesamtzählerstände eine Zuordnung von Reifendrucküberwachungseinheiten zu dem Fahrzeug vorzunehmen. Beispielsweise können bei einem Fahrzeug mit vier Rädern die Kennungen mit den vier höchsten Gesamtzählerstände dem Fahrzeug zu geordnet werden.

Eine weitere vorteilhafte Weiterbildung der Erfindung sieht vor, dass die zentrale Empfangseinheit ihre Zählerstände auf Null setzt, wenn sich das Fahrzeug in den letzten x Minuten nicht bewegt hat. Die einzelnen Reifendrucküberwachungseinheiten können ihre Zählerstände beispielsweise auf Null setzen, wenn sie in den letzten y Minuten keine Raddrehung (etwa mittels eine Beschleunigungssensors) detektiert haben, wobei y eine vorgegebene Zahl ist. Auf diese Weise kann gewährleistet werden, dass das Verfahren stets neu durchgeführt wird, wenn die Möglichkeit besteht, dass ein Reifenwechsel stattgefunden hat, also das Fahrzeug ausreichend lange Zeit nicht bewegt wurde.

Weitere Einzelheiten und Vorteile des erfindungsgemäßen Verfahrens werden im Folgenden an einem Ausführungsbeispiel erläutert.

Die Reifendrucküberwachungseinheiten, die mit dem erfindungsgemäßen Verfahren einem Fahrzeug zugeordnet werden, enthalten eine Energiequelle, etwa eine Batterie oder einen Generator, einen Drucksensor und eine Sendeeinrichtung zur Kommunikation mittels Bluetooth. Zusätzlich können die Reifendrucküberwachungseinheiten weitere Sensoren enthalten, beispielsweise Temperatur- und Beschleunigungssensoren.

Jede Reifendrucküberwachungseinheit hat eine für sie charakteristische Kennung, die in den Datentelegrammen enthalten ist, die von der betreffenden Reifendrucküberwachungseinheit ausgesandt werden. Eine zentrale Empfangseinheit des Fahrzeugs empfängt Datentelegramme sowohl von Reifendrucküberwachungseinheiten dieses Fahrzeugs als auch von Reifendrucküberwachungseinheiten fremder Fahrzeuge. Die zentrale Empfangseinheit speichert die empfangenen charakteristischen Kennungen ab und speichert zu jeder dieser Kennungen in einem Zähler, wie oft die betreffende Kennung empfangen wurde.

Auf der Grundlage der Zählerstände erstellt die zentrale Empfangseinheit eine Datenbank, die für eine charakteristische Kennung jeweils angibt, wie oft die zentrale Empfangseinheit ein Datentelegramm mit der betreffenden Kennung empfangen hat. Je häufiger eine charakteristische Kennung von der zentralen Empfangseinheit empfangen wurde, desto wahrscheinlicher ist es, dass die betreffende Kennung zu einer Reifendrucküberwachungseinheit des Fahrzeugs gehört. Die interessantesten Einträge einer solchen Datenbank sind also die charakteristischen Kennungen mit den höchsten Zählerständen.

Sobald ein (höchster) Zählerstand der zentralen Empfangseinheit einen vorgegebenen Wert erreicht, beispielsweise 5 oder mehr, erstellt die zentrale Empfangseinheit auf der Grundlage dieser Datenbank eine Liste, die so viele Einträge enthält, wie das Fahrzeug Räder hat, und jeweils die charakteristischen Kennungen enthält, die von der zentralen Empfangseinheit am häufigsten Empfangen wurden. Bei einem Fahrzeug mit vier Rädern enthält eine solche Liste also die vier Kennungen, die von der zentralen Empfangseinheit am häufigsten empfangen wurden.

Die einzelnen Reifendrucküberwachungseinheiten empfangen Datentelegramme anderer Reifendrucküberwachungseinheiten und erfassen in Zählerständen ebenfalls wie oft eine gegebenen charakteristische Kennung bereits empfangen wurde.

Wenn die zentrale Empfangseinheit eine Liste erstellt hat, welche die am häufigsten empfangenen charakteristischen Kennungen enthält, fordert die zentrale Empfangseinheit die Reifendrucküberwachungseinheiten, deren charakteristische Kennungen in dieser Liste gespeichert sind, in einem Datentelegramm jeweils eine Liste zu senden, die angibt, welche charakteristischen Kennungen von der betreffenden Reifendrucküberwachungseinheit am häufigsten empfangen wurden.

Während die Liste der zentralen Empfangseinheit für jedes Fahrzeugrad einen Eintrag enthalten muss, also bei einem Fahrzeug mit n Rädern n Einträge enthält, kann die entsprechende Liste der Reifendrucküberwachungseinheiten einen Eintrag weniger enthalten, also n-1.

Die zentrale Empfangseinheit prüft dann, ob die alle Einträge der auf Anfrage ausgesandten Listen in der Liste der zentralen Empfangseinheit enthalten sind. Falls dies der Fall ist, werden die in der Liste der zentralen Empfangseinheit enthalten Kennungen dem Fahrzeug zugeordnet. Falls dies nicht der Fall ist, wird das Verfahren fortgesetzt, d.h. die zentrale Empfangseinheit wartet den Empfang weiterer Datentelegramme ab. Die auf der Grundlage von Zählerständen erstellte Liste der zentralen Empfangseinheit kann sich wegen Empfang weiterer Datentelegramme ändern oder (vorläufig) gleich bleiben. Die zentrale Empfangseinheit fordert dann die Reifendrucküberwachungseinheiten der aktuellen Liste auf, ihre entsprechenden (aktuellen) Listen zu schicken und prüft dann erneut, ob Übereinstimmung besteht, d.h. alle in den empfangenen Listen enthaltenen Kennungen auch in der Liste der zentralen Empfangseinheit enthalten sind. Falls dies der Fall ist, werden die in der Liste der zentralen Empfangseinheit enthaltenen Kennungen dem Fahrzeug zugeordnet. Falls nicht, wird das Verfahren fortgesetzt und der Empfang weiterer Datentelegramme abgewartet.

Die zentrale Empfangseinheit kann Reifendrucküberwachungseinheiten erneut zum Aussenden ihrer Listen auffordern, wenn eine vorgegebene Anzahl von weiteren Datentelegrammen empfangen wurden, eine vorgegebene Zeitspanne verstrichen ist oder beispielsweise der höchste Zählerstand der zentralen Empfangseinheit einen höheren vorgegebenen Wert erreicht, etwa einen um 1 höheren Wert als bei der vorangegangenen Sendeaufforderung.

## Patentansprüche

1. Verfahren zur Zuordnung von Reifendrucküberwachungseinheiten zu einem Fahrzeug, wobei
die Reifendrucküberwachungseinheiten jeweils Datentelegramme aussenden, die jeweils eine charakteristische Kennung der sendenden Reifendrucküberwachungseinheit enthalten, und
die Datentelegramme von einer zentralen Empfangseinheit des Fahrzeugs empfangen werden,
die zentrale Empfangseinheit für jede charakteristische Kennung, die in einem der von ihr empfangenen Datentelegramme enthalten ist, in einem Zähler erfasst, wie viele Datentelegramme mit dieser Kennung empfangen wurden, um anhand der Häufigkeit der empfangenen Kennungen zu entscheiden welche Reifendrucküberwachungseinheiten zu dem Fahrzeug gehören,
**dadurch gekennzeichnet, dass**
die Reifendrucküberwachungseinheiten des Fahrzeugs jeweils Datentelegramme von anderen Reifendrucküberwachungseinheiten empfangen und für jede charakteristische Kennung, die in einem der empfangenen Datentelegramme enthalten ist, in Zählern erfassen, wie viele Datentelegramme mit dieser Kennung empfangen wurden, und
die Reifendrucküberwachungseinheiten der zentralen Empfangseinheit in Datentelegrammen mitteilen, welche charakteristischen Kennungen sie am häufigsten empfangen haben, und
die zentrale Empfangseinheit bei der Zuordnung von Reifendrucküberwachungseinheiten zu dem Fahrzeug berücksichtigt, welche charakteristischen Kennungen die Reifendrucküberwachungseinheiten am häufigsten empfangen haben.

2. Verfahren nach Anspruch 1, **dadurch gekennzeichnet, dass** die Datentelegramme von den Reifendrucküberwachungseinheiten über Bluetooth gesendet werden.

3. Verfahren nach einem der vorstehenden Ansprüche, **dadurch gekennzeichnet, dass** die Reifendrucküberwachungseinheiten der zentralen Empfangseinheit ihre Zählerstände in Datentelegrammen mitteilen.

4. Verfahren nach einem der vorstehenden Ansprüche, **dadurch gekennzeichnet, dass** die zentrale Empfangseinheit des Fahrzeugs bei einem Fahrzeug mit n Rädern eine Liste erstellt, die angibt, welche n Kennungen von der zentralen Empfangseinheit am häufigsten empfangen wurden, und
prüft, ob jene n-1 Kennungen, die von den Reifendrucküberwachungseinheiten dieser n Kennungen jeweils am häufigsten empfangen wurden, jeweils in dieser Liste enthalten sind und, falls diese der Fall ist, die n Reifendrucküberwachungseinheiten, deren charakteristische Kennungen in der Liste enthalten sind, dem Fahrzeug zuordnet,
wobei n eine natürliche Zahl ist, die größer oder gleich vier ist.

5. Verfahren nach einem der vorstehenden Ansprüche, **dadurch gekennzeichnet, dass** die Reifendrucküberwachungseinheiten Datentelegrammen mit der Information, welche charakteristischen Kennungen sie am häufigsten empfangen haben, als Antwort auf eine Aufforderung der zentralen Empfangseinheit des Fahrzeugs aussenden.

6. Verfahren nach Anspruch 4 und 5, **dadurch gekennzeichnet, dass** die zentrale Empfangseinheit des Fahrzeugs nur die Reifendrucküberwachungseinheiten zum Aussenden der Information, welche charakteristischen Kennungen sie am häufigsten empfangen haben, auffordert, deren charakteristische Kennung in der Liste enthalten ist.

7. Verfahren nach Anspruch 5 oder 6, **dadurch gekennzeichnet, dass** die zentrale Empfangseinheit erst dann eine Aufforderung an Reifendrucküberwachungseinheiten aussendet, wenn der höchste Zählerstand der zentralen Empfangseinheit einen vorgegebenen Mindestwert übersteigt.

8. Verfahren nach einem der vorstehenden Ansprüche, **dadurch gekennzeichnet, dass** die zentrale Empfangseinheit ihre Zählerstände auf Null setzt, wenn sich das Fahrzeug in den letzten x Minuten nicht bewegt hat, wobei x eine vorgegebene Zahl ist.

9. Verfahren nach einem der vorstehenden Ansprüche, **dadurch gekennzeichnet, dass** die Reifendrucküberwachungseinheiten ihre Zählerstände jeweils auf Null setzten, wenn sie in den letzten y Minuten keine Raddrehung detektiert haben, wobei y eine vorgegebene Zahl ist.

## Claims

1. Method for assigning tyre pressure monitoring units to a vehicle, wherein
the tyre pressure monitoring units each transmit data telegrams which each contain a characteristic identifier of the transmitting tyre pressure monitoring unit, and
the data telegrams are received by a central receiver unit of the vehicle,
the central receiving unit records in a counter, for each characteristic identifier contained in one of the data telegrams received by it, how many data telegrams with this identifier have been received, in order to decide which tyre pressure monitoring units belong to the vehicle on the basis of the frequency of the received identifiers, **characterised in that**
the tyre pressure monitoring units of the vehicle each receive data telegrams from other tyre pressure monitoring units and, for each characteristic identifier contained in one of the received data telegrams, record in counters how many data telegrams with that identifier have been received, and
the tyre pressure monitoring units inform the central receiving unit in data telegrams which characteristic identifiers they have received most frequently, and
when assigning tyre pressure monitoring units to the vehicle, the central receiving unit takes into account which characteristic identifiers the tyre pressure monitoring units have received most frequently.

2. Method according to claim 1, **characterised in that** the data telegrams are transmitted by the tyre pressure monitoring units via Bluetooth.

3. Method according to one of the preceding claims, **characterised in that** the tyre pressure monitoring units communicate their counter readings to the central receiving unit in data telegrams.

4. Method according to one of the preceding claims, **characterised in that** the central receiving unit of the vehicle, in the case of a vehicle with n wheels, creates a list indicating which n identifiers have been received most frequently by the central receiving unit, and
checks whether the n-1 identifiers most frequently received by the tyre pressure monitoring units of these n identifiers are contained in this list and, if this is the case, assigns the n tyre pressure monitoring units whose characteristic identifiers are contained in the list to the vehicle,
where n is a natural number greater than or equal to four.

5. Method according to one of the preceding claims, **characterised in that** the tyre pressure monitoring units transmit data telegrams with the information as to which characteristic identifiers they have received most frequently, in response to a request from the central receiving unit of the vehicle.

6. Method according to claims 4 and 5, **characterised in that** the central receiving unit of the vehicle only requests the tyre pressure monitoring units whose characteristic identifier is contained in the list to send out the information as to which characteristic identifiers they have received most frequently.

7. Method according to claim 5 or 6, **characterised in that** the central receiving unit only sends a request to tyre pressure monitoring units when the highest counter reading of the central receiving unit exceeds a predetermined minimum value.

8. Method according to one of the preceding claims, **characterised in that** the central receiving unit sets its counter readings to zero if the vehicle has not moved in the last x minutes, where x is a predetermined number.

9. Method according to one of the preceding claims, **characterised in that** the tyre pressure monitoring units each set their counter readings to zero if they have not detected any wheel rotation in the last y minutes, y being a predetermined number.

## Revendications

1. Procédé d'attribution d'unités de surveillance de pression de pneu à un véhicule, dans lequel
les unités de surveillance de pression de pneu émettent chacune des télégrammes de données contenant chacun un identificateur caractéristique de l'unité de surveillance de pression de pneu émettrice, et
les télégrammes de données sont reçus par une unité centrale de réception du véhicule,
l'unité centrale de réception enregistre dans un compteur, pour chaque identificateur caractéristique contenu dans l'un des télégrammes de données qu'elle a reçus, le nombre de télégrammes de données avec cet identificateur qui ont été reçus, afin de décider quelles unités de surveillance de pression de pneu appartiennent au véhicule sur la base de la fréquence des identificateurs reçus,
**caractérisés en ce que**
les unités de surveillance de pression de pneu du véhicule reçoivent chacune des télégrammes de données provenant d'autres unités de surveillance de pression de pneu et, pour chaque identificateur caractéristique contenu dans l'un des télégrammes de données reçus, enregistrent dans des compteurs le nombre de télégrammes de données avec cet identificateur qui ont été reçus, et
les unités de surveillance de pression de pneu informent l'unité centrale de réception, par le biais de télégrammes de données, des identificateurs caractéristiques qu'elles ont reçus le plus fréquemment, et
lors de l'attribution des unités de surveillance de pression de pneu au véhicule, l'unité centrale de réception tient compte des identificateurs caractéristiques que les unités de surveillance de pression des pneus ont reçus le plus fréquemment.

2. Procédé selon la revendication 1, **caractérisé en ce que** les télégrammes de données sont transmis par les unités de surveillance de pression de pneu via Bluetooth.

3. Procédé selon l'une des revendications précédentes, **caractérisé en ce que** les unités de surveillance de pression de pneu communiquent leurs valeurs de compteur à l'unité centrale de réception sous forme de télégrammes de données.

4. Procédé selon l'une des revendications précédentes, **caractérisé en ce que** l'unité centrale de réception du véhicule, dans le cas d'un véhicule à n roues, crée une liste indiquant les n identificateurs qui ont été reçus le plus fréquemment par l'unité centrale de réception, et
vérifie si les n-1 identificateurs les plus fréquemment reçus par les unités de surveillance de pression de pneu de ces n identificateurs sont contenus dans cette liste et, si tel est le cas, affecte au véhicule les n unités de surveillance de pression de pneu dont les identificateurs caractéristiques sont contenus dans la liste,
où n est un nombre naturel supérieur ou égal à quatre.

5. Procédé selon l'une des revendications précédentes, **caractérisé en ce que** les unités de surveillance de pression de pneu transmettent des télégrammes de données contenant les informations relatives aux identificateurs caractéristiques qu'elles ont reçus le plus fréquemment, en réponse à une demande de l'unité centrale de réception du véhicule.

6. Procédé selon les revendications 4 et 5, **caractérisé en ce que** l'unité centrale de réception du véhicule ne demande qu'aux unités de surveillance de pression de pneu dont l'identificateur caractéristiques est contenu dans la liste d'envoyer les informations relatives aux identificateurs caractéristiques qu'elles ont reçus le plus fréquemment.

7. Procédé selon les revendications 5 ou 6, **caractérisé en ce que** l'unité centrale de réception n'envoie une demande aux unités de surveillance de pression de pneu que lorsque la valeur la plus élevée du compteur de l'unité centrale de réception dépasse une valeur minimale prédéterminée.

8. Procédé selon l'une des revendications précédentes, **caractérisé en ce que** l'unité centrale de réception met à zéro les valeurs de son compteur si le véhicule n'a pas bougé au cours des x dernières minutes, x étant un nombre prédéterminé.

9. Procédé selon l'une des revendications précédentes, **caractérisé en ce que** les unités de surveillance de pression de pneu mettent chacune leur compteur à zéro si elles n'ont détecté aucune rotation de roue au cours des y dernières minutes, y étant un nombre prédéterminé.
